# EUROPÄISCHE PATENTSCHRIFT

(11) **EP 3 133 213 B1**
(45) Veröffentlichungstag und Bekanntmachung des Hinweises auf die Patenterteilung: **29.04.2020**
(21) Anmeldenummer: 16184550.8
(22) Anmeldetag: 17.08.2016
(51) Int. Cl.: E02F 9/26, H01F 38/14, H04B 5/00, E02F 3/36, E02F 3/96, H01R 13/66, H01R 13/24, H01R 24/38

(54) **SCHNELLWECHSLER ZUR VERWENDUNG ZWISCHEN EINER BAUMASCHINE UND EINEM ANBAUGERÄT**
QUICK CHANGE DEVICE FOR USE BETWEEN A CONSTRUCTION MACHINE AND AN ACCESSORY EQUIPMENT
DISPOSITIF DE CHANGEMENT RAPIDE POUR UTILISATION ENTRE UN ENGIN DE CHANTIER ET UN ACCESSOIRE

(30) Priorität: 21.08.2015 DE 102015216060
(43) Veröffentlichungstag der Anmeldung: 22.02.2017
(73) Patentinhaber: MTS Maschinentechnik Schrode AG, 72534 Hayingen (DE)
(72) Erfinder: Goebel, Bernd, 72525 Münsingen (DE); Missel, Peter, 89584 Granheim (DE)
(74) Vertreter: DREISS Patentanwälte PartG mbB

(56) Entgegenhaltungen:
- EP-A1- 1 102 360
- WO-A1-97/02630
- WO-A1-2006/123982
- DE-A1- 3 722 196
- DE-A1- 10 220 450
- US-A- 3 810 258
- US-A- 4 543 556
- US-A- 5 338 148
- US-A- 5 488 352
- US-A1- 2002 157 287
- US-A1- 2005 204 591
- US-A1- 2009 198 409
- US-A1- 2013 102 163
- US-A1- 2014 285 957

## Beschreibung

Die Erfindung betrifft einen Schnellwechsler mit Verbindungsanordnung nach dem Oberbegriff des Anspruchs 1.

Der Übertragung von Daten kommt mit jeder weiteren Digitalisierung eine immer größer werdende Bedeutung zu. Bei schwierigen Umgebungsbedingungen, wie Feuchtigkeit, Schmutz und Öl, ist jedoch gerade die Datenübertragung über elektrische Steckverbinder besonders kritisch. Durch die geringen Ströme und Spannungen in Kombination mit hoher Übertragungsrate sind diese Steckverbinder besonders störanfällig. Zusätzlich unterliegen klassische Steckverbinder einem mechanischen Verschleiß, welcher bei Verschmutzung exponentiell zunimmt. Besonders schwierig ist eine automatische Kopplung von Steckverbindern bei diesen schwierigen Umgebungsbedingungen, da eine automatische Reinigung und/oder Dehydrierung schwierig bis unmöglich ist.

Induktive Datenübertragungen sind aus diesem Grunde bei schwierigen Umgebungsbedingungen bekannt. Da sie kontaktlos über eine Strecke von einigen Millimetern arbeiten, können sie wasser- und staubdicht hergestellt werden. Diese Systeme können als Steckerersatz oder mit eigener Intelligenz zur Steuerung und Messung ausgeführt sein. Auch die Übertragung von Energie mittels Induktion ist bekannt.

Der Nachteil einer induktiven Übertragung von Leistung ist jedoch die problematische exakte Dimensionierung eines solchen Systems bzw. die benötigte Baugröße bei größeren übertragenen Leistungen. Während eine konventionelle Steckverbindung selbst bei großen zu übertragenden Leistungen kompakt und günstig herzustellen ist, kann bei einem induktiven System die Übertragungsleistung nur geringfügig erweitert werden.

Die US2009/0198409 beschreibt einen Schnellwechsler nach dem Oberbegriff von Anspruch 1.

Die US 5,488,352 beschreibt eine Verbindungsanordnung zur Verbindung eines LKW-Zugfahrzeugs mit einem Anhänger.

Die US 2014/0285957 A1 beschreibt eine magnetisch gekoppelte Verbindungsanordnung.

Die DE 102 20 450 A1 beschreibt ein Datenkabel.

Die US 4,543,556 beschreibt ein induktives Kopplungssystem.

Die 3,810,258 beschreibt einen Schnellverbinder.

Die WO 97/02630 beschreibt eine Kopplungseinrichtung mit kreisförmigen Verbindungsteilen.

Die US 2013/0102163 A1 betrifft eine Ladeverbindung für Elektroautos.

In der EP 1 102 360 A1 ist eine Ladeverbindung für Elektroautos beschrieben.

Aufgabe der vorliegenden Erfindung ist es, eine Verbindungsanordnung in einem Schnellwechsler zu schaffen, die besonders vielseitig eingesetzt werden kann.

Diese Aufgabe wird durch einem Schnellwechsler mit Verbindungsanordnung mit den Merkmalen des Anspruchs 1 gelöst. Vorteilhafte Weiterbildungen sind in Unteransprüchen angegeben. Für die Erfindung wichtige Merkmale finden sich darüber hinaus in der nachfolgenden Beschreibung und in der Zeichnung. Dabei können die Merkmale für die Erfindung sowohl in Alleinstellung als auch in ganz unterschiedlichen Kombinationen wichtig sein.

Die erfindungsgemäße Verbindungsanordnung des Schnellwechslers kann also als "Kombi-Stecker" bezeichnet werden, da sie zwei (oder mehr) vollkommen unterschiedliche und unabhängig voneinander arbeitende Prinzipien der Übertragung von elektrischer Energie miteinander kombiniert (dabei sei an dieser Stelle darauf hingewiesen, dass hier und nachfolgend unter dem Begriff der elektrischen "Energie" nicht nur der strenge physikalische Energiebegriff verstanden wird, sondern im Zusammenhang mit der vorliegenden Erfindung hierunter die Übertragung von elektrischer Leistung, die Übertragung von elektrischen Signalen, die Übertragung von Daten, als auch ganz allgemein die Übertragung von Informationen verstanden wird):

Zum Einen das Prinzip von zwei sich berührenden elektrischen Kontakten, zum Anderen das Prinzip einer kontaktlosen, induktiven Übertragung. Durch die Kombination dieser beiden Prinzipien der Übertragung von elektrischer Energie werden die Nachteile beider Prinzipien minimiert. Zudem ist eine solche Verbindungsanordnung kaskadierbar, d.h., dass aufgrund der äußerst geringen Verluste bei der Übertragung mehrere derartige Verbindungsanordnungen hintereinander geschaltet werden können.

Eine vorteilhafte Weiterbildung des erfindungsgemäßen Schnellwechsler mit Verbindungsanordnung zeichnet sich dadurch aus, dass das zweite Verbindungsteil eine Ausnehmung mit einem Bereich mit sich verjüngendem Querschnitt aufweist, wobei die Ausnehmung ausgebildet ist, um bei mechanisch gekoppelten Verbindungsteilen einen Vorsprung, der am ersten Verbindungsteil ausgebildet ist, aufzunehmen, wobei der Vorsprung einen Bereich mit sich erweiterndem Querschnitt aufweist, der komplementär zu dem Bereich mit sich verjüngendem Querschnitt der Ausnehmung ausgebildet ist. Hierdurch ist die Verbindungsanordnung quasi selbstzentrierend, der Vorsprung findet beim Koppeln quasi von selbst in die richtige Position in der Ausnehmung, und kann auch unter widrigen Bedingungen, bspw. bei starker Verschmutzung oder Ähnlichem, zuverlässig mechanisch gekoppelt werden.

Von Vorteil ist auch, wenn der Bereich der Ausnehmung mit sich verjüngendem Querschnitt keilförmig, kegelstumpfförmig, kugelsegmentförmig oder pyramidenstumpfförmig ausgebildet ist. Hierdurch erfolgt die Selbstzentrierung der Verbindungsanordnung besonders effizient.

Bei einer vorteilhaften Ausführungsform des Schnellwechslers mit Verbindungsanordnung weißt die Ausnehmung zwei, vorzugsweise in einem Winkel von im Wesentlichen 90°, keilförmig aufeinander zulaufende erste Kopplungsflächen auf und der Vorsprung zwei, vorzugsweise in einem Winkel von im Wesentlichen 90°, keilförmig aufeinander zulaufende zweite Kopplungsflächen auf. Hierdurch ist die mechanische Kopplung zwischen dem ersten Verbindungsteil und dem zweiten Verbindungsteil besonders robust.

Vorteilhaft ist auch, wenn bei dem erfindungsgemäßen Schnellwechsler mit Verbindungsanordnung bei mechanisch gekoppelten Verbindungsteilen die ersten Kopplungsflächen an den zweiten Kopplungsflächen anliegen. Hierdurch ist im mechanisch gekoppelten Zustand stets eine zuverlässige Verbindung des ersten Verbindungsteils mit dem zweiten Verbindungsteil gewährleistet.

Bei einer bevorzugten Variante dieses Schnellwechslers mit Verbindungsanordnung ist die erste kontaktlose, induktive Übertragungseinrichtung auf einer der ersten Kopplungsflächen angeordnet ist und die zweite kontaktlose, induktive Übertragungseinrichtung auf einer der zweiten Kopplungsflächen angeordnet ist. Dadurch, dass die kontaktlosen, induktiven Übertragungseinrichtungen auf den Kopplungsflächen, die im mechanisch gekoppelten Zustand aneinander anliegen angeordnet sind ist deren Kopplung zuverlässig gewährleistet.

Vorteilhaft ist auch, wenn die Verbindungsteile jeweils eine orthogonal zu einer Verbindungsrichtung der Verbindungsanordnung verlaufende Fläche aufweisen. Hierdurch wird ein präzise definierter Anschlag gebildet, der das Einführen des Vorsprungs in die Ausnehmung erleichtert.

Bei einer vorteilhaften Weiterbildung des Schnellwechslers mit Verbindungsanordnung sind der erste elektrische Kontakt und der zweite elektrische Kontakt jeweils auf den orthogonal zu der Verbindungsrichtung verlaufenden Flächen angeordnet. Hierdurch ist bei mechanisch gekoppelter Verbindungsanordnung ein elektrischer Kontakt zwischen erstem elektrischen Kontakt und zweitem elektrischen Kontakt sichergestellt.

Ferner ist es möglich, dass mindestens ein elektrischer Kontakt einen stationären Flächenkontakt umfasst. Insbesondere dann, wenn der gegenüber liegende berührende elektrische Kontakt ein Stiftkontakt ist und dieser federnd gelagert ist, wird hierdurch eine zuverlässige elektrische Kontaktierung auch bei nicht genau zueinander ausgerichteten Verbindungsteilen gewährleistet.

Dabei kann der Flächenkontakt als Ringsegment oder als Ring ausgebildet sein. Auf diese Weise wird es möglich, dass eine elektrische Kontaktierung zuverlässig hergestellt werden kann, auch wenn die beiden Verbindungsteile in azimutaler Richtung zueinander verdreht sind.

Die erste kontaktlose Übertragungseinrichtung und/oder die zweite kontaktlose Übertragungseinrichtung können/kann scheibenförmig oder kreisringförmig ausgebildet sein. Auch dies hat den Vorteil, dass für eine sichere Übertragung zwischen den beiden kontaktlosen, induktiven Übertragungseinrichtungen eine exakte azimutale Ausrichtung der beiden Verbindungsteile zueinander nicht erforderlich ist. Hierdurch wird der Einsatz erleichtert.

In die gleiche Richtung geht jene Weiterbildung der erfindungsgemäßen Verbindungsanordnung, bei der die elektrischen Kontakte und/oder die kontaktlosen, induktiven Übertragungseinrichtungen zueinander koaxial angeordnet sind.

Besonders vorteilhaft ist der erfindungsgemäße Schnellwechsler mit Verbindungsanordnung dann, wenn die elektrischen Kontakte für eine Übertragung von elektrischer Leistung und die kontaktlosen, induktiven Übertragungseinrichtungen für eine Übertragung von elektrischen Signalen oder von Daten oder einfach von Informationen ausgebildet sind. Mittels der elektrischen Kontakte können auch große elektrische Leistungen zuverlässig übertragen werden, wohingegen die kontaktlosen, induktiven Übertragungseinrichtungen auch bei Verschmutzung die meist geringen elektrischen Leistungen, welche bei einer Datenübertragung erforderlich sind, problemlos übertragen können.

Ein besonderer Vorteil des erfindungsgemäßen Schnellwechslers mit Verbindungsanordnung besteht auch darin, dass nicht nur zwei schaltungstechnisch getrennte elektrische Energiewege miteinander verbunden werden können, sondern praktisch eine beliebige Anzahl solcher schaltungstechnisch getrennter Wege zur Verfügung gestellt wird, und dass dabei auch mehr als zwei unterschiedliche Übertragungsarten eingesetzt werden können. Dies gilt insbesondere für die kontaktlosen, induktiven Übertragungseinrichtungen, welche nicht nur nach dem Prinzip der elektromagnetischen Induktion arbeiten können, sondern beispielsweise auch optisch, kapazitiv oder mit klassischen Funksignalen arbeiten können. Mit einer einzigen Verbindungsanordnung kann so eine Vielzahl unterschiedlicher Signale mit den jeweils für das spezifische Signal optimalen Verbindungsarten übertragen werden. Konkret wird dies ermöglicht durch eine Verbindungsanordnung, welche eine Mehrzahl von Paaren von ersten und zweiten elektrischen Kontakten und/oder von Paaren von ersten und zweiten kontaktlosen, induktiven Übertragungseinrichtungen aufweist, und bei der mindestens ein Paar von ersten und zweiten elektrischen Kontakten von einem anderen Paar von ersten und zweiten elektrischen Kontakten, und/oder mindestens ein Paar von ersten und zweiten kontaktlosen, induktiven Übertragungseinrichtungen von einem anderen Paar von ersten und zweiten kontaktlosen, induktiven Übertragungseinrichtungen schaltungstechnisch getrennt ist.

Nachfolgend werden Ausführungsformen der Erfindung unter Bezugnahme auf die beiliegende Zeichnung erläutert. In der Zeichnung zeigen:
Figur 1 eine perspektivische Darstellung einer Baumaschine in Form eines Baggers mit einem Anbaugerät in Form eines Anbauverdichters und einem schematisch gezeigten Schnellwechsler;
Figur 2 eine schematische Darstellung einer Verbindungsanordnung, die in den Schnellwechsler von Figur 1 integriert ist;
Figur 3 eine perspektivische Darstellung eines ersten Verbindungsteils und eines zweiten Verbindungsteils der Verbindungsanordnung von Figur 2;
Figur 4 einen schematischen Schnitt durch die Verbindungsanordnung von Figur 3; und
Figur 5 eine Ansicht von vorne auf eine alternative Ausführungsform eines Verbindungsteils einer Verbindungsanordnung.
Figur 6 eine perspektivische Darstellung einer alternativen Ausführungsform einer Verbindungsanordnung.
Figur 7 eine weitere Ansicht der Verbindungsanordnung aus Figur 6.

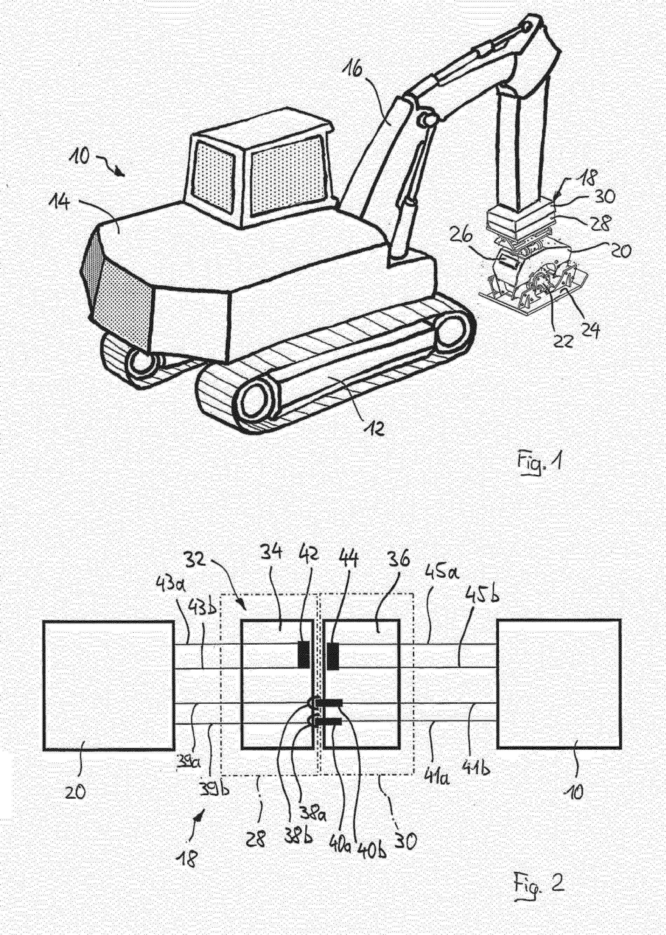

Eine Baumaschine in Form eines Baggers trägt in Figur 1 insgesamt das Bezugszeichen 10. Der Bagger 10 umfasst ein Unterteil 12, ein Oberteil 14 und einen an diesem beweglich befestigten Baggerarm 16. Am abragenden Ende des Baggerarms 16 ist ein in Figur 1 nur schematisch angedeuteter hydraulischer Schnellwechsler 18 angeordnet, mittels dem vorliegend ein Anbauverdichter 20 an den Baggerarm 16 angekuppelt ist. Alternativ zu dem Anbauverdichter 20 könnte an den Baggerarm 16 auch beispielsweise eine Baggerschaufel, eine Bodenaufbereitungseinrichtung, oder etwas ähnliches mittels des Schnellwechslers 18 angekuppelt werden.

Der Anbauverdichter 20 verfügt über einen Hydraulikmotor 22, durch den eine Verdichterplatte 24 in Schwingungen versetzt werden kann. Der Anbauverdichter 20 weist ferner eine elektronische Auswerteeinrichtung 26 auf. Diese umfasst mehrere Sensoren, einen Mikroprozessor, sowie akustische und optische Anzeigeeinrichtungen, die in der Figur jedoch nicht dargestellt sind. Mittels der Auswerteeinrichtung 26 können während des Betriebs des Anbauverdichters 20 Bodenparameter erfasst und aus diesen weitere Bodenparameter, welche beispielsweise den Grad der Verdichtung charakterisieren, ermittelt werden. Hierzu wird die elektrische Auswerteeinrichtung 46, wie weiter unten noch dargelegt werden wird, vom Bagger 10 mit elektrischer Energie versorgt, und sie erhält vom Bagger 10 über eine entsprechende Datenleitung auch Daten, die für die Auswertung benötigt werden. In umgekehrter Richtung überträgt die Auswerteeinrichtung 26 Daten über die besagte Datenleitung an den Bagger 10.

Alternativ könnte beispielsweise eine Drehung des Anbauverdichters 20 um eine im Wesentlichen vertikale Achse durch einen Elektromotor bewirkt werden, der vom Bagger 10 mit elektrischer Energie versorgt wird, und eine von einem Sensor erfasste aktuelle Drehstellung des Anbauverdichters 20 könnte über eine entsprechende Datenleitung an den Bagger 20 übermittelt werden.

Jedenfalls ist der Anbauverdichter 20 mit dem Bagger 10 nicht nur hydraulisch, sondern auch elektrisch verbunden, und zwar wird sowohl elektrische Leistung zur Leistungsversorgung übertragen, als auch Daten werden übertragen. Insoweit bildet der Schnellwechsler 18 sowohl eine elektrische als auch eine hydraulische Schnittstelle zwischen dem Bagger 10 und dem Anbauverdichter 20.

Zum Ankuppeln des Anbauverdichters 20 an den Baggerarm 16 verfügt der Schnellwechsler 18 über einen zum Anbauverdichter 20 gehörenden unteren Abschnitt 28 und einen zum Baggerarm 16 gehörenden oberen Abschnitt 30. Der Schnellwechsler 18 ist so ausgebildet, dass beim Ankuppeln sowohl die elektrischen Verbindungen, die Datenverbindungen als auch die hydraulischen Verbindungen zwischen dem Anbauverdichter 20 und dem Bagger 10 automatisch hergestellt werden, und dass beim Abkuppeln diese Verbindungen automatisch gelöst werden.

Zur Herstellung der elektrischen Leistungs- und Datenverbindungen ist in den Schnellwechsler 18 eine Verbindungsanordnung 32 integriert, deren grundsätzlicher Aufbau nun unter Bezugnahme auf Figur 2 erläutert wird. Zu der Verbindungsanordnung 32 gehört ein erstes Verbindungsteil 34, welches in dem zum Anbauverdichter 20 gehörenden unteren Abschnitt 28 des Schnellwechslers 18 angeordnet ist, sowie ein zweites Verbindungsteil 36, welches in dem zum Bagger 10 gehörenden oberen Abschnitt 30 des Schnellwechslers 18 angeordnet ist.

Das erste Verbindungsteil 34 weist zwei erste elektrische Kontakte 38 a und 38 b auf, die über elektrische Versorgungsleitungen 39 a und 39 b mit dem Anbauverdichter 20 verbunden sind. Das zweite Verbindungsteil 36 weist zwei zweite elektrische Kontakte 40 a und 40 b auf, die über elektrische Versorgungsleitungen 41 a und 41 b mit dem Bagger 10 verbunden sind. Wenn der obere Abschnitt 30 des Schnellwechslers 18 mit dem unteren Abschnitt 28 gekoppelt ist, ist auch das erste Verbindungsteil 34 mit dem zweiten Verbindungsteil 36 mechanisch gekoppelt und zwar so, dass es von diesem zerstörungsfrei und wiederholbar gelöst werden kann. Sind das erste Verbindungsteil 34 und das zweite Verbindungsteil 36 miteinander gekoppelt, dann berühren die ersten elektrischen Kontakte 38 a und 38 b die ihnen gegenüber liegenden zweiten elektrischen Kontakte 40 a und 40 b elektrisch leitend, so das elektrische Leistung zur Leistungsversorgung der elektronischen Auswerteeinrichtung 26 übertragen werden kann.

Das erste Verbindungsteil 34 weist ferner eine erste kontaktlose Übertragungseinrichtung 42 auf, die über Datenleitungen 43 a und 43 b mit dem Anbauverdichter 20 verbunden ist, und das zweite Verbindungsteil 36 weist eine zweite kontaktlose Übertragungseinrichtung 44 auf, die über Datenleitungen 45 a und 45 b mit dem Bagger 10 verbunden ist. Sind das erste Verbindungsteil 34 und das zweite Verbindungsteil 36, wie in Figur 2 dargestellt, miteinander mechanisch gekoppelt, wirken die beiden Übertragungseinrichtungen 42 und 44 miteinander zusammen, ohne sich elektrisch zu kontaktieren, und zwar derart, dass zwischen den beiden Übertragungseinrichtungen 42 und 44 Daten bzw. Informationen oder Signale übertragen werden können.

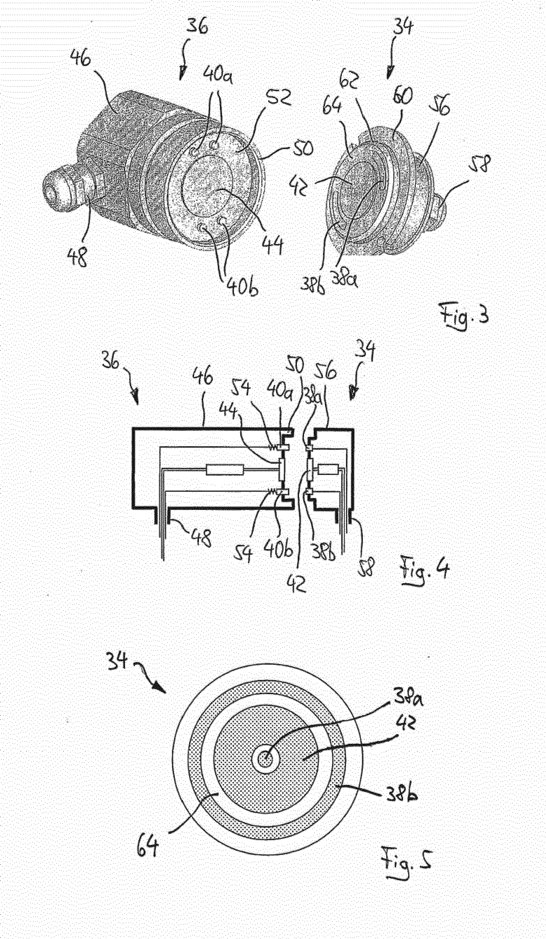

Die Figuren 3 und 4 zeigen eine mögliche Ausgestaltung einer Verbindungsanordnung 32 etwas stärker im Detail. Das zweite Verbindungsteil 36 weist ein Gehäuse 46 auf, welches insgesamt zylindrische Gestalt hat und im Querschnitt zumindest bereichsweise 6-eckig ist. Seitlich an dem Gehäuse 46 ist ein Anschlussstutzen 48 angeordnet, durch den die elektrischen Versorgungsleitungen 41 a und 41 b sowie die Datenleitungen 45 a und 45 b geführt sind.

An einer Stirnseite des Gehäuses 46 ist ein umlaufender und sich axial erstreckender Kragen 50 vorhanden. Radial einwärts von dem Kragen 50 ist die Stirnseite im Wesentlichen eben ausgeführt, sie trägt in Figur 3 das Bezugszeichen 52. In ihrer Mitte ist die zweite kontaktlose Übertragungseinrichtung 44 angedeutet in Form einer in der Draufsicht kreisrunden Erhebung. Radial außerhalb von der Übertragungseinrichtung 44 sind die zweiten elektrischen Kontakte 40 a und 40 b als Paare von federnd gelagerten Stiftkontakten angeordnet. Die Federn sind schematisch angedeutet und tragen das Bezugszeichen 54 in Figur 4.

Das erste Verbindungsteil 34 weist ein Gehäuse 56 auf, welches insgesamt ebenfalls zylindrisch, jedoch in axialer Richtung etwas kürzer ist als das Gehäuse 46. Es weist ebenfalls einen Anschlussstutzen 58 auf, durch den die elektrischen Versorgungsleitungen 39 a und 39 b sowie die Datenleitungen 43 a und 43 b hindurch geführt sind. Während in Figur 3 der Anschlussstutzen 58 axial angeordnet ist, ist er in Figur 4 seitlich gezeichnet.

Das erste Verbindungsteil 34 weist einen sich nach radial außen erstreckenden Bund 60 auf, sowie einen zum zweiten Verbindungsteil 36 hin weisenden kurzen Zylinderabschnitt 62, dessen Außendurchmesser etwas kleiner ist als die lichte Weite des Kragens 50 des zweiten Verbindungsteils 36. In einer Stirnfläche 64 des Zylinderabschnitts 62 ist zentrisch die erste kontaktlose Übertragungseinrichtung 42 in Form einer in der Draufsicht kreisrunden Erhebung angedeutet. Radial außerhalb von der Übertragungseinrichtung 42 sind einander gegenüber liegend die ersten elektrischen Kontakte 38 a und 38 b als stationäre Flächenkontakte in der Form von Kreisringsegmenten angeordnet.

Die eben beschriebene Verbindungsanordnung 32 funktioniert folgendermaßen: wenn die beiden Abschnitte 28 und 30 des Schnellwechslers 18 miteinander gekoppelt werden, wird automatisch der Zylinderabschnitt 62 des ersten Verbindungsteils 34 in den Raum radial innerhalb vom Kragen 50 des zweiten Verbindungsteils 36 eingeführt. Dabei drücken die ersten elektrischen Kontakte 38 a und 38 b gegen die ihnen gegenüber liegenden federnden zweiten elektrischen Kontakte 40 a und 40 b, so dass sich diese Kontakte 38 a und 40 a bzw. 38 b und 40 b elektrisch leitend berühren. Somit kann Strom über die Versorgungsleitungen 41 und 39 vom Bagger 10 zum Anbauverdichter 20 strömen und dort beispielsweise zur elektrischen Versorgung der elektronischen Auswerteeinrichtung 26 dienen.

Wenn der Zylinderabschnitt 62 in den Raum radial einwärts vom Kragen 50 eingeführt ist, liegen sich die beiden kontaktlos arbeitenden Übertragungseinrichtungen 42 und 44 unmittelbar gegenüber, jedoch ohne sich elektrisch zu kontaktieren. Somit können Daten über die beiden kontaktlosen, induktiven Übertragungseinrichtungen 42 und 44 und die Datenleitungen 43 und 45 vom Bagger 10 zum Anbauverdichter 20 übertragen werden, und auch vom Anbauverdichter 20 zurück an den Bagger 10 übertragen werden.

Werden die beiden Abschnitte 28 und 30 des Schnellwechslers 28 voneinander gelöst, heben die flächigen ersten elektrischen Kontakte 38 a und 38 b von den stiftförmigen zweiten elektrischen Kontakten 40 a und 40 b ab, so dass die entsprechende elektrische Verbindung zur Leistungsversorgung unterbrochen wird, und entfernen sich die beiden kontaktlosen, induktiven Übertragungseinrichtungen 42 und 44 voneinander, so dass auch die Datenverbindung unterbrochen wird.

Figur 5 zeigt schematisch eine Draufsicht auf eine weitere mögliche Anordnung beispielsweise der ersten elektrischen Kontakte 38 und der ersten kontaktlosen, induktiven Übertragungseinrichtung 42 auf der Stirnseite 64 des ersten Verbindungsteils 34. Dabei tragen solche Elemente und Bereiche, welche funktionsäquivalent sind zu Elementen und Bereichen, die bereits im Zusammenhang mit den Figuren 1-4 erläutert wurden, die gleichen Bezugszeichen.

Aus Figur 5 ist ersichtlich, dass ein erster elektrischer Kontakt 38 a als mittiger Stiftkontakt ausgeführt ist, dass dann radial außerhalb von diesem eine ringförmige erste kontaktlose Übertragungseinrichtung 42, beispielsweise eine Induktionsfläche (Ferrit-/Topfkern) zur Datenübertragung beispielsweise innerhalb von einem CAN-Bus, angeordnet ist, und dass schließlich nochmals radial außerhalb hiervon ein weiterer erster elektrischer Kontakt 38 b als federnd gelagerte ringförmige Kontaktfläche ausgebildet ist.

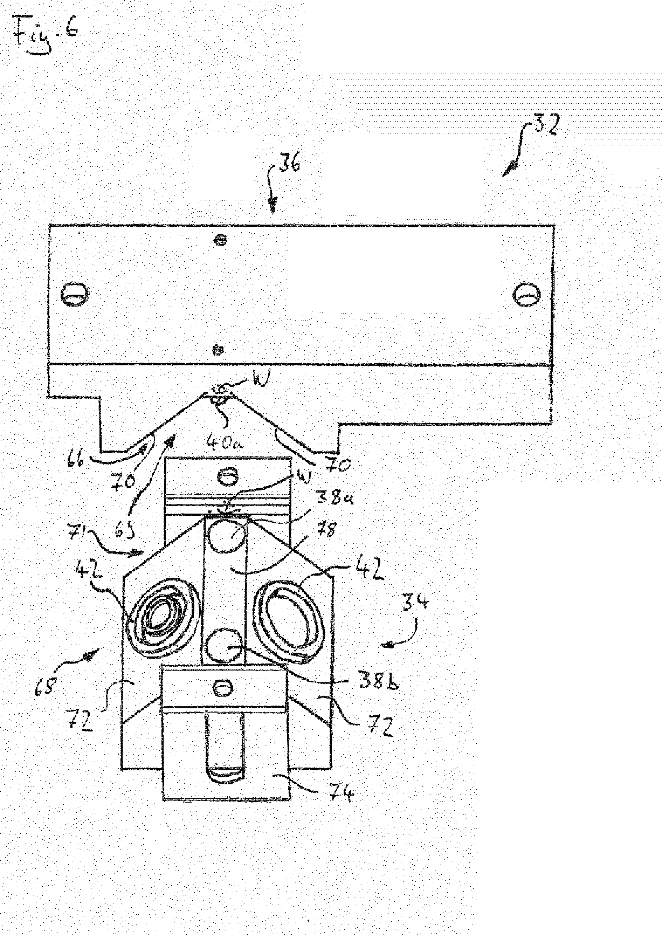

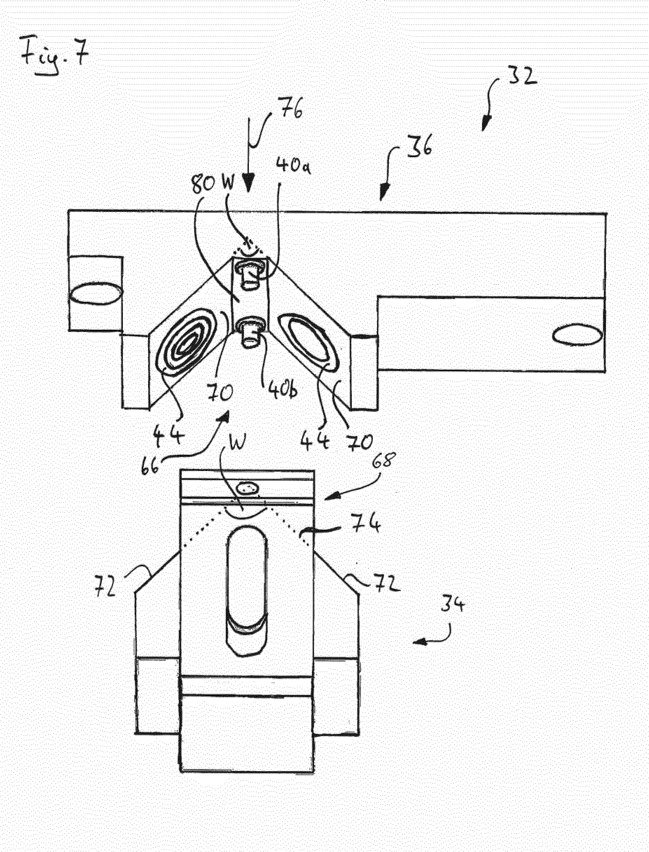

Die Figuren 6 und 7 zeigen verschiedene perspektivische Ansichten einer Verbindungsanordnung 32 gemäß einer weiteren Ausführungsform der vorliegenden Erfindung. Das zweite Verbindungsteil 36 weist bei dieser Ausführungsform eine Ausnehmung 66 auf. Die Ausnehmung 66 ist ausgebildet, um bei mechanisch gekoppelten Verbindungsteilen 34, 36 einen Vorsprung 68, der an dem zweiten Verbindungsteil 36 ausgebildet ist, aufzunehmen. Die Ausnehmung weist einen Bereich 69 mit sich verjüngendem Querschnitt auf. Die Ausnehmung 66 weist in dem Bereich 69 zwei keilförmig aufeinander zulaufende erste Kopplungsflächen 70 auf. Der Vorsprung 68 weist einen Bereich 71 mit sich erweiterndem Querschnitt auf, der komplementär zu dem Bereich mit sich verjüngendem Querschnitt der Ausnehmung 66 ausgebildet ist. Entsprechend dem Bereich 69 der Ausnehmung 66 weist der Vorsprung 68 zwei keilförmig aufeinander zu laufende zweite Kopplungsflächen 72 auf. Die ersten Kopplungsflächen 70 und die zweiten Kopplungsflächen 72 laufen keilförmig aufeinander zu, in einem Winkel W von im Wesentlichen 90°. Die eben beschriebene Ausführung des Bereichs 69 der Ausnehmung 66 mit sich verjüngendem Querschnitt ist jedoch nicht zwingend, bspw. ist auch denkbar, dass dieser keilförmig, kegelstumpfförmig, kugelsegmentförmig oder pyramidenstumpfförmig ausgebildet ist.

Die Figuren 6 und 7 zeigen die Verbindungsanordnung 32 jeweils in einem Zustand, in dem das erste Verbindungsteil 34 von dem zweiten Verbindungsteil 36 gelöst ist. Im mechanisch gekoppelten Zustand der Verbindungsteile 34, 36 ist der Vorsprung 68 in der Ausnehmung 66 aufgenommen und die ersten Kopplungsflächen 70 liegen an den zweiten Kopplungsflächen 72 an.

Über Winkeleinrichtungen 74 ist das erste Verbindungsteil 34 am unteren Abschnitt 28 des Schnellwechslers 18 angebracht. Das zweite Verbindungsteil 36 ist wiederum am oberen Abschnitt 30 des Schnellwechslers 18 angebracht. Das erste Verbindungsteil 34 und das zweite Verbindungsteil 36 werden beim mechanischen Koppeln entlang einer Verbindungsrichtung 76 aufeinander zugeführt und der Vorsprung 68 dabei in die Ausnehmung 66 eingeführt.

Orthogonal zu der Verbindungsrichtung 76 der Verbindungsanordnung 32 weist das erste Verbindungsteil 34 eine erste orthogonal verlaufende Fläche 78 auf und das zweite Verbindungsteil 36 eine zweite orthogonal verlaufende Fläche 80. Die ersten elektrischen Kontakte 38a, 38b und die zweiten elektrischen Kontakte 40a, 40b sind jeweils auf den orthogonal verlaufenden Flächen 78 bzw. 80 angeordnet. Die ersten kontaktlosen, induktiven Übertragungseinrichtungen 42 sind auf den zweiten Kopplungsflächen 72 angeordnet. Die zweiten kontaktlosen, induktiven Übertragungseinrichtungen sind auf den ersten Kopplungsflächen 70 des zweiten Verbindungsteils 36 angeordnet.

Die Verbindungsanordnung 32 der Figuren 6 und 7 funktioniert folgendermaßen: Wenn die beiden Abschnitte 28 und 30 des Schnellwechslers 18 miteinander gekoppelt werden, wird der Vorsprung 68 in der Ausnehmung 66 aufgenommen. Die ersten Kopplungsflächen 70 liegen dann an den zweiten Kopplungsflächen 72 an. In diesem mechanisch gekoppelten Zustand drücken die ersten elektrischen Kontakte 38a, 38b gegen die federnden zweiten elektrischen Kontakte 40a, 40b. Hierdurch kommt eine elektrisch leitende Verbindung zustande. Strom kann dadurch über die Versorgungsleitung 41 und 39 vom Bagger 10 zum Anbauverdichter 20 strömen.

Die jeweiligen ersten kontaktlosen, induktiven Übertragungseinrichtungen sind in den zweiten kontaktlosen, induktiven Übertragungseinrichtungen 44 aufgenommen und sind dadurch in unmittelbarer Nähe zu diesen angeordnet. Hierdurch können Daten über die beiden kontaktlosen, induktiven Übertragungseinrichtungen 42 und 44 und die Datenleitungen 43 und 45 vom Bagger 10 zum Anbauverdichter 20 übertragen werden. Zusätzlich sind die beiden kontaktlosen, induktiven Übertragungseinrichtungen 42 und 44 derart ausgelegt, dass sie elektrische Leistung übertragen können. Das erste Verbindungsteil 34 und das zweite Verbindungsteil 36 sind dabei drehbar gelagert in der Schnittstelle 18 angeordnet. Außerdem sind das erste Verbindungsteil 34 und das zweite Verbindungsteil 36 federnd gelagert in der Schnittstelle 18 angeordnet ist. Hierdurch kann die Verbindungsanordnung 32 ohne vorherige genaue Ausrichtung des ersten Verbindungsteils 34 und des zweiten Verbindungsteils 36 zueinander zuverlässig gekoppelt werden.

## Patentansprüche

1. Schnellwechsler (18) zur Verwendung zwischen einer Baumaschine (10) und einem Anbaugerät (20) mit einer Verbindungsanordnung (32), umfassend ein erstes Verbindungsteil (34) und ein zweites Verbindungsteil (36), wobei das erste und das zweite Verbindungsteil (34, 36) miteinander mechanisch koppelbar und voneinander zerstörungsfrei und wiederholbar lösbar sind, wobei das erste Verbindungsteil (34) mindestens einen ersten elektrischen Kontakt (38) aufweist, der bei mechanisch gekoppelten Verbindungsteilen (34, 36) einen zweiten elektrischen Kontakt (40) des zweiten Verbindungsteils (36) elektrisch leitend berührt, wobei das erste Verbindungsteil (34) ferner eine erste kontaktlose, induktive Übertragungseinrichtung (42) aufweist, die bei mechanisch gekoppelten Verbindungsteilen (34, 36) mit einer zweiten kontaktlosen, induktiven Übertragungseinrichtung (44) des zweiten Verbindungsteils (36) induktiv zusammenwirkt, **dadurch gekennzeichnet, dass** mindestens ein elektrischer Kontakt einen elektrischen Stiftkontakt (40) oder einen elektrischen Flächenkontakt (38) umfasst, und wobei der Stiftkontakt (40) oder der elektrische Flächenkontakt (38) federnd gelagert ist.

2. Schnellwechsler (18) mit Verbindungsanordnung (32) nach Anspruch 1, **dadurch gekennzeichnet, dass** das zweite Verbindungsteil (34) eine Ausnehmung (66) mit einem Bereich mit sich verjüngendem Querschnitt aufweist, wobei die Ausnehmung (66) ausgebildet ist, um bei mechanisch gekoppelten Verbindungsteilen (34, 36) einen Vorsprung (68), der am ersten Verbindungsteil (36) ausgebildet ist, aufzunehmen, wobei der Vorsprung (68) einen Bereich mit sich erweiterndem Querschnitt aufweist, der komplementär zu dem Bereich mit sich verjüngendem Querschnitt der Ausnehmung (66) ausgebildet ist.

3. Schnellwechsler (18) mit Verbindungsanordnung (32) nach Anspruch 2, **dadurch gekennzeichnet, dass** der Bereich der Ausnehmung (66) mit sich verjüngendem Querschnitt keilförmig, kegelstumpfförmig, kugelsegmentförmig oder pyramidenstumpfförmig ausgebildet ist.

4. Schnellwechsler (18) mit Verbindungsanordnung (32) nach Anspruch 2 oder 3, **dadurch gekennzeichnet, dass** die Ausnehmung (66) zwei, vorzugsweise in einem Winkel (W) von im Wesentlichen 90°, keilförmig aufeinander zulaufende erste Kopplungsflächen (70) aufweist und der Vorsprung (68) zwei, vorzugsweise in einem Winkel von im Wesentlichen 90°, keilförmig aufeinander zulaufende zweite Kopplungsflächen (72) aufweist.

5. Schnellwechsler (18) mit Verbindungsanordnung (32) nach Anspruch 4, **dadurch gekennzeichnet, dass** bei mechanisch gekoppelten Verbindungsteilen (34, 36) die ersten Kopplungsflächen (70) an den zweiten Kopplungsflächen (72) anliegen.

6. Schnellwechsler (18) mit Verbindungsanordnung (32) nach einem oder mehreren der Ansprüche 2 bis 5, **dadurch gekennzeichnet, dass** die erste kontaktlose, induktive Übertragungseinrichtung (42) auf dem Bereich mit sich verjüngendem Querschnitt der Ausnehmung (66), insbesondere auf einer der ersten Kopplungsflächen (70), angeordnet ist und die zweite kontaktlose, induktive Übertragungseinrichtung (44) auf dem Bereich mit sich erweiterndem Querschnitt des Vorsprungs (68), insbesondere auf einer der zweiten Kopplungsflächen (72), angeordnet ist.

7. Schnellwechsler (18) mit Verbindungsanordnung (32) nach einem oder mehreren der Ansprüche 2 bis 6, **dadurch gekennzeichnet, dass** die Verbindungsteile (34, 36) jeweils eine orthogonal zu einer Verbindungsrichtung (76) der Verbindungsanordnung (32) verlaufende Fläche (78, 80) aufweisen.

8. Schnellwechsler (18) mit Verbindungsanordnung (32) nach Anspruch 7, **dadurch gekennzeichnet, dass** der erste elektrische Kontakt (38) und der zweite elektrische Kontakt (40) jeweils auf den orthogonal zu der Verbindungsrichtung (76) verlaufenden Flächen (78, 80) angeordnet sind.

9. Schnellwechsler (18) mit Verbindungsanordnung (32) nach einem der vorhergehenden Ansprüche, **dadurch gekennzeichnet, dass** mindestens ein elektrischer Kontakt (38) einen stationären Kontakt umfasst.

10. Schnellwechsler (18) mit Verbindungsanordnung (32) nach einem der vorhergehenden Ansprüche, **dadurch gekennzeichnet, dass** der Flächenkontakt (38) als Ringsegment oder als Ring ausgebildet ist.

11. Schnellwechsler (18) mit Verbindungsanordnung (32) nach einem der vorhergehenden Ansprüche, **dadurch gekennzeichnet, dass** die erste kontaktlose, induktive Übertragungseinrichtung (42) und/oder die zweite kontaktlose, induktive Übertragungseinrichtung (44) scheibenförmig oder kreisringförmig ausgebildet ist.

12. Schnellwechsler (18) mit Verbindungsanordnung (32) nach einem der vorhergehenden Ansprüche, **dadurch gekennzeichnet, dass** die elektrischen Kontakte (38) und/oder die kontaktlosen, induktiven Übertragungseinrichtungen (42) zueinander koaxial angeordnet sind.

## Claims

1. Quick coupler (18) for use between a construction machine (10) and an attachment (20), said coupler having a connection arrangement (32) that comprises a first connection part (34) and a second connection part (36), it being possible to mechanically couple the first and the second connection part (34, 36) to one another and to non-destructively and repeatably detach said parts from one another, the first connection part (34) having at least one first electrical contact (38) which, when the connection parts (34, 36) are mechanically coupled, electrically conductively contacts a second electrical contact (40) of the second connection part (36), the first connection part (34) further having a first contactless, inductive transmission device (42) which, when the connection parts (34, 36) are mechanically coupled, inductively interacts with a second contactless, inductive transmission device (44) of the second connection part (36), **characterized in that** at least one electrical contact comprises an electrical pin contact (40) or an electrical surface contact (38), and the pin contact (40) or the electrical surface contact (38) being spring-mounted.

2. Quick coupler (18) having a connection arrangement (32) according to claim 1, **characterized in that** the second connection part (36) has a recess (66) having a region that has a tapering cross section, the recess (66) being designed to receive, when the connection parts (34, 36) are mechanically coupled, a projection (68) which is formed on the first connection part (34), the projection (68) having a region that has an expanding cross section which is formed complementarily to the region of the recess (66) that has a tapering cross section.

3. Quick coupler (18) having a connection arrangement (32) according to claim 2, **characterized in that** the region of the recess (66) having a tapering cross section is wedge-shaped, truncated-cone-shaped, spherical-segment-shaped or truncated-pyramid-shaped.

4. Quick coupler (18) having a connection arrangement (32) according to claim 2 or claim 3, **characterized in that** the recess (66) has two first coupling surfaces (70) that converge in a wedge-like manner, preferably at an angle (W) of substantially 90°, and the projection (68) has two second coupling surfaces (72) that converge in a wedge-like manner, preferably at an angle of substantially 90°.

5. Quick coupler (18) having a connection arrangement (32) according to claim 4, **characterized in that**, when the connection parts (34, 36) are mechanically coupled, the first coupling surfaces (70) abut the second coupling surfaces (72).

6. Quick coupler (18) having a connection arrangement (32) according to one or more of claims 2 to 5, **characterized in that** the first contactless, inductive transmission device (42) is arranged on the region of the recess (66) that has a tapering cross section, in particular on one of the first coupling surfaces (70), and the second contactless inductive transmission device (44) is arranged on the region of the projection (68) that has an expanding cross section, in particular on one of the second coupling surfaces (72).

7. Quick coupler (18) having a connection arrangement (32) according to one or more of claims 2 to 6, **characterized in that** the connection parts (34, 36) each have a surface (78, 80) that is orthogonal to a connection direction (76) of the connection arrangement (32).

8. Quick coupler (18) having a connection arrangement (32) according to claim 7, **characterized in that** the first electrical contact (38) and the second electrical contact (40) are each arranged on the surfaces (78, 80) that are orthogonal to the connection direction (76).

9. Quick coupler (18) having a connection arrangement (32) according to any of the preceding claims, **characterized in that** at least one electrical contact (38) comprises a stationary contact.

10. Quick coupler (18) having a connection arrangement (32) according to any of the preceding claims, **characterized in that** the surface contact (38) is designed as a ring segment or as a ring.

11. Quick coupler (18) having a connection arrangement (32) according to any of the preceding claims, **characterized in that** the first contactless, inductive transmission device (42) and/or the second contactless, inductive transmission device (44) is disc-shaped or annular.

12. Quick coupler (18) having a connection arrangement (32) according to any of the preceding claims, **characterized in that** the electrical contacts (38) and/or the contactless, inductive transmission devices (42) are arranged coaxially to one another.

## Revendications

1. Système d'attache rapide (18) destiné à être utilisé entre un engin de chantier (10) et un accessoire (20) avec un ensemble de liaison (32), comprenant une première partie de liaison (34) et une deuxième partie de liaison (36), dans lequel la première et la deuxième partie de liaison (34, 36) peuvent être accouplées mécaniquement l'une à l'autre et peuvent être détachées l'une de l'autre de manière non destructive et reproductible, dans lequel la première partie de liaison (34) présente au moins un premier contact électrique (38), qui, lorsque les parties de liaison (34, 36) sont accouplées mécaniquement, touche de manière électroconductrice un deuxième contact électrique (40) de la deuxième partie de liaison (36), dans lequel la première partie de liaison (34) présente en outre un premier dispositif de transmission par induction sans contact (42), qui, lorsque les parties de liaison (34, 36) sont accouplées mécaniquement, coopère par induction avec un deuxième dispositif de transmission par induction sans contact (44) de la deuxième partie de liaison (36), **caractérisé en ce qu'**au moins un contact électrique comprend un contact mâle électrique (40) ou un contact débordant électrique (38), et dans lequel le contact mâle (40) ou le contact débordant électrique (38) est monté de manière élastique.

2. Système d'attache rapide (18) avec ensemble de liaison (32) selon la revendication 1, **caractérisé en ce que** la deuxième partie de liaison (36) présente un évidement (66) avec une zone à section transversale se rétrécissant, dans lequel l'évidement (66) est réalisé, lorsque les parties de liaison (34, 36) sont accouplées mécaniquement, pour loger une partie saillante (68), qui est réalisée sur la première partie de liaison (34), dans lequel la partie saillante (68) présente une zone à section transversale s'élargissant, qui est réalisée de manière complémentaire de la zone à section se rétrécissant de l'évidement (66).

3. Système d'attache rapide (18) avec ensemble de liaison (32) selon la revendication 2, **caractérisé en ce que** la zone de l'évidement (66) à section transversale se rétrécissant est réalisée en forme de coin, en forme de cône tronqué, en forme de segment sphérique ou en forme de pyramide tronquée.

4. Système d'attache rapide (18) avec ensemble de liaison (32) selon la revendication 2 ou 3, **caractérisé en ce que** l'évidement (66) présente deux premières surfaces d'accouplement (70) convergeant l'une vers l'autre en forme de coin, de préférence selon un angle (W) de sensiblement 90°, et la partie saillante (68) présente deux deuxièmes surfaces d'accouplement (72) convergeant l'une vers l'autre en forme de coin, de préférence selon un angle de sensiblement 90°.

5. Système d'attache rapide (18) avec ensemble de liaison (32) selon la revendication 4, **caractérisé en ce que**, lorsque les parties de liaison (34, 36) sont accouplées mécaniquement, les premières surfaces d'accouplement (70) s'appliquent contre les deuxièmes surfaces d'accouplement (72) .

6. Système d'attache rapide (18) avec ensemble de liaison (32) selon l'une ou plusieurs des revendications 2 à 5, **caractérisé en ce que** le premier dispositif de transmission par induction sans contact (42) est disposé sur la zone à section transversale se rétrécissant de l'évidement (66), en particulier sur une des premières surfaces d'accouplement (70), et le deuxième dispositif de transmission par induction sans contact (44) est disposé sur la zone à section transversale s'élargissant de la partie saillante (68), en particulier sur une des deuxièmes surfaces d'accouplement (72).

7. Système d'attache rapide (18) avec ensemble de liaison (32) selon l'une ou plusieurs des revendications 2 à 6, **caractérisé en ce que** les parties de liaison (34, 36) présentent respectivement une surface (78, 80) s'étendant perpendiculairement à une direction de liaison (76) de l'ensemble de liaison (32).

8. Système d'attache rapide (18) avec ensemble de liaison (32) selon la revendication 7, **caractérisé en ce que** le premier contact électrique (38) et le deuxième contact électrique (40) sont disposés respectivement sur les surfaces (78, 80) s'étendant perpendiculairement à la direction de liaison (76).

9. Système d'attache rapide (18) avec ensemble de liaison (32) selon l'une quelconque des revendications précédentes, **caractérisé en ce qu'**au moins un contact électrique (38) comprend un contact fixe.

10. Système d'attache rapide (18) avec ensemble de liaison (32) selon l'une quelconque des revendications précédentes, **caractérisé en ce que** le contact débordant (38) est réalisé sous la forme d'un segment annulaire ou sous la forme d'un anneau.

11. Système d'attache rapide (18) avec ensemble de liaison (32) selon l'une quelconque des revendications précédentes, **caractérisé en ce que** le premier dispositif de transmission par induction sans contact (42) et/ou le deuxième dispositif de transmission par induction sans contact (44) sont réalisés en forme de disque ou en forme d'anneau circulaire.

12. Système d'attache rapide (18) avec ensemble de liaison (32) selon l'une quelconque des revendications précédentes, **caractérisé en ce que** les contacts électriques (38) et/ou les dispositifs de transmission par induction sans contact (42) sont disposés de manière coaxiale les uns par rapport aux autres.
